(19) Europäisches Patentamt
European Patent Office
Office européen des brevets

(11) **EP 4 239 511 A1**

(12) **EUROPEAN PATENT APPLICATION**
published in accordance with Art. 153(4) EPC

(43) Date of publication:
**06.09.2023 Bulletin 2023/36**

(21) Application number: **21885625.0**

(22) Date of filing: **21.07.2021**

(51) International Patent Classification (IPC):
*G06F 30/10* (2020.01)    *G06F 30/18* (2020.01)
*G06F 113/14* (2020.01)

(52) Cooperative Patent Classification (CPC):
**G06F 30/10; G06F 30/18;** G06F 2113/14

(86) International application number:
**PCT/JP2021/027355**

(87) International publication number:
**WO 2022/091503 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2020 JP 2020181645**

(71) Applicant: **Mizuho Research & Technologies, Ltd.
Tokyo 101-8443 (JP)**

(72) Inventors:
• **TSUKAMOTO Takayuki
Tokyo 101-8443 (JP)**
• **TAKAYAMA Tsutomu
Tokyo 101-8443 (JP)**

(74) Representative: **Daub, Thomas
Patent- und Rechtsanwaltskanzlei Daub
Bahnhofstrasse 5
88662 Überlingen (DE)**

(54) **DESIGN ASSISTANCE SYSTEM, DESIGN ASSISTANCE METHOD, AND DESIGN ASSISTANCE PROGRAM**

(57)    A design support system (20) includes a controlling unit connected to an input unit. The controlling unit (21) obtains, from the input unit, information representing a flow channel network that simulates a flow channel shape. The controlling unit (21) then uses a flow channel width and a flow channel depth of the flow channel network, thereby generating design data of a three-dimensional flow channel that is obtained by three-dimensionalizing the flow channel network.

Fig.1

# Description

## TECHNICAL FIELD

The present disclosure relates to a design support system, a design support method, and a design support program for designing flow channels.

## BACKGROUND ART

Three-dimensional computer-aided design (CAD) has been used to design structures. Also, techniques for efficiently generating CAD information have been considered. For example, Patent Literature 1 discloses a technique for recognizing a room arrangement in a hand-drawn floor plan. The technique uses an investigation sheet having multiple cells defined by vertical and horizontal lines and a server that receives data of captured images of the cells. The server performs an image recognition process while shifting from one cell to another. The server recognizes closed rectangles on the investigation sheet and identifies the recognized rectangles as rooms. Subsequently, the server reads information of doors and windows in closed rectangles, which have been identified as rooms, and determines the type of each room based on the information of doors and windows. The server generates CAD information based on the types of the rooms.

Three-dimensional CAD is also used in design of a structure including flow channels. For example, a solid polymer fuel cell includes anode flow channels for flows of hydrogen gas, cathode flow channels for flows of air, and a membrane electrode assembly (MEA), in which electrochemical reaction of hydrogen molecules and oxygen molecules takes place. Techniques have been considered that evaluate performance of such a structure through simulation. For example, Patent Literature 2 discloses a technique that calculates a power generation amount by associating the flow channel shape of a fuel cell with a physical property of the fuel cell. Also, Non-Patent Literature 1 discloses a technique that reads a three-dimensional CAD file of a solid polymer fuel cell, and calculates a power generation property under various operating conditions.

## CITATION LIST

### Patent Literature

Patent Literature 1: Japanese Laid-Open Patent Publication No. 2020-38582
Patent Literature 2: Japanese Laid-Open Patent Publication No. 2005-347016

### Non-Patent Literature

Non-Patent Literature 1: Mizuho Information & Research Institute, "Mizuho Information & Research Institute Technical Report, Vol.8, No.1/A Fuel Cell Simulation Software Package P-Stack 4.0: Introduction of Full-Scale Stack Simulator and its Remarkable Features", 2017 [online], website of Mizuho Information & Research Institute, [searched on October 5, 2020], Internet https://www.mizuho-ir.co.jp/publication/giho/pdf/008_03.pdf

## SUMMARY OF INVENTION

### Technical Problem

In order to evaluate the quality of flow channels, the three-dimensional structure needs to be considered to determine a flow channel shape, instead of the structure represented by a two-dimensional drawing. As compared to creation of two-dimensional drawings, creation of drawings with three-dimensional CAD requires a relatively high amount of workload. Designing proper flow channels involves performing trial-and-error iterations of repeated changes and evaluations of a flow channel shape. Creation of drawings with three-dimensional CAD thus requires significant time and manpower.

### Solution to Problem

In one aspect, a design support system is provided. The design support system comprises a controlling unit that is connected to an input unit. The controlling unit is configured to: obtain, from the input unit, information representing a flow channel network that simulates a flow channel shape; and use a flow channel width and a flow channel depth of the flow channel network, thereby generating design data of a three-dimensional flow channel that is obtained by three-dimensionalizing the flow channel network.

In another aspect, a method for performing design support by using a design support system is provided. The design support system includes a controlling unit connected to an input unit. The method comprises the controlling unit obtaining, from the input unit, information representing a flow channel network that simulates a flow channel shape; and the controlling unit using a flow channel width and a flow channel depth of the flow channel network, thereby generating design data of a three-dimensional flow channel that is obtained by three-dimensionalizing the flow channel network.

In yet another aspect, a program for performing design support is provided. When executed by a controlling unit of a design support system, the program causes the controlling unit to: obtain, from an input unit connected to the controlling unit, information representing a flow channel network that simulates a flow channel shape; and use a flow channel width and a flow channel depth of the flow channel network, thereby generating design data of a three-dimensional flow channel that is obtained by three-dimensionalizing the flow channel network.

BRIEF DESCRIPTION OF DRAWINGS

Fig. 1 is an explanatory diagram illustrating a design support system according to one embodiment.
Fig. 2 is an explanatory diagram illustrating a hardware configuration of the embodiment.
Fig. 3 is an explanatory diagram illustrating a routine of the present embodiment.
Fig. 4 is an explanatory diagram illustrating a design entry screen of the present embodiment.
Fig. 5 is an explanatory diagram illustrating a flow channel network of the present embodiment.
Fig. 6 is an explanatory diagram illustrating a flow channel network of the present embodiment.
Fig. 7 is an explanatory diagram illustrating a variable area of the flow channel network of the present embodiment.
Fig. 8 is an explanatory diagram illustrating a fluid property of the flow channel network of the present embodiment.
Fig. 9 is an explanatory diagram illustrating a process that creates a flow channel plan view of the embodiment.
Fig. 10 is an explanatory diagram illustrating a flow channel plan view of the embodiment.
Fig. 11 is an explanatory diagram illustrating a flow channel plan view of the embodiment.
Fig. 12 is an explanatory diagram illustrating a two-dimensional drawing of flow channels of the embodiment.
Fig. 13 is an explanatory diagram illustrating three-dimensional shapes of flow channels of the embodiment.
Fig. 14 is an explanatory diagram illustrating the shape of a solid polymer fuel cell of the embodiment.
Fig. 15 is a cross-sectional view of the shape of the solid polymer fuel cell of the embodiment.
Fig. 16 is an explanatory diagram illustrating a mesh of flow channels of the embodiment.
Fig. 17 is an explanatory diagram illustrating a mesh of flow channels of prior art.

DESCRIPTION OF EMBODIMENTS

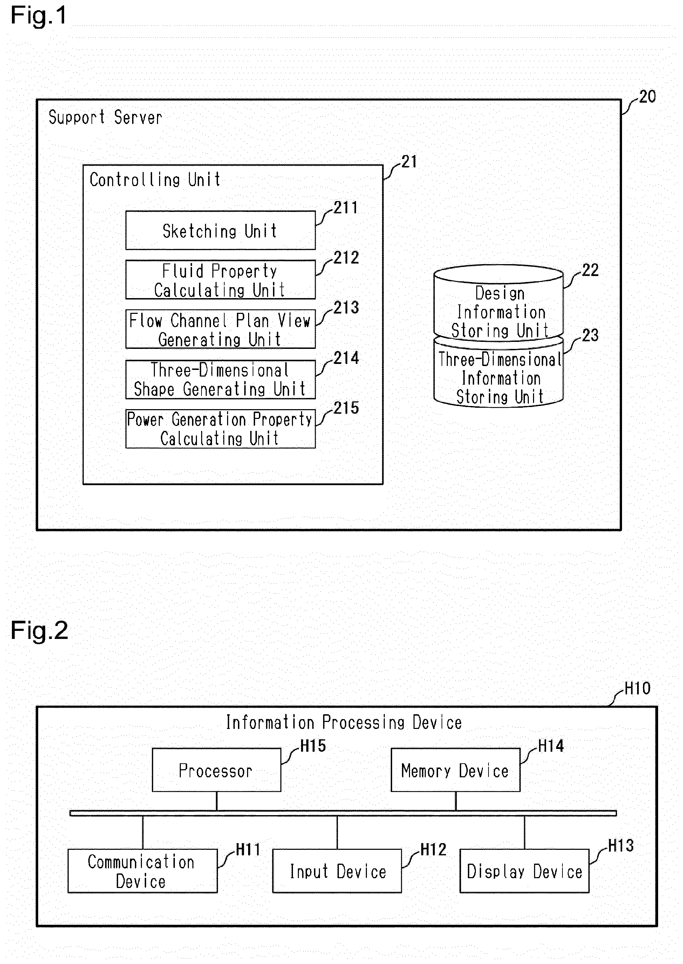

A design support system, a design support method, and a design support program according to on embodiment will be described with reference to Figs. 1 to 17. The present embodiment describes a case in which flow channels in a solid polymer fuel cell are designed by using a sketch of a flow channel network depicted with dots and lines. The solid polymer fuel cell of the present embodiment includes metal separators that include recesses and protrusions formed by stamping. A membrane electrode assembly (MEA) is sandwiched between two metal separators having different patterns of recesses and protrusions (an anode separator and a cathode separator) to form a cell, which is a basic unit of the fuel cell. A cell stack is formed by stacking cells in layers so that a predetermined output can be obtained. Hydrogen gas flows through space between the anode separator and the MEA, and air flows through space between the cathode separator and the MEA. The MEA generates power through electrochemical reaction between hydrogen molecules and oxygen molecules. Coolant flows through space between the anode separator and the cathode separator to remove heat produced through power generation.
As shown in Fig. 1, a design support system 20 is used in the present embodiment.

[Hardware Configuration]

Fig. 2 illustrates a hardware configuration of an information processing device H10, which functions, for example, as the design support system 20.
The information processing device H10 includes a communication device H11, an input device H12, a display device H13, a memory device H14, and a processor H15. This hardware configuration is merely one example, and other hardware may be employed
The communication device H11 is an interface that establishes communication paths with other devices so as to transmit and receive data. The communication device H11 is, for example, a network interface or a wireless interface.
The input device H12 receives input from a user, and is, for example, a mouse or a keyboard. The display device H13 is, for example, a display or a touch screen that displays various types of information.
The memory device H14 stores data and various programs used to perform various functions of the design support system 20 (for example, a design information storing unit 22 and a three-dimensional information storing unit 23, which will be discussed below). Examples of the memory device H14 include a memory such as ROM, RAM and a hard disk drive.
The processor H15 uses programs and data stored in the memory device H14, so as to control processes in the design support system 20 (for example, processes in a controlling unit 21, which will be discussed below). Examples of the processor H15 include a CPU and an MPU. The processor H15 expands, in RAM, programs stored in ROM or the like, so as to execute commands corresponding to various processes. For example, when an application program of the design support system 20 is started, the processor H15 executes commands corresponding to processes discussed below.
The processor H15 is not limited to one that performs software processing on all processes executed by itself. For example, the processor H15 may include a dedicated hardware circuit (for example, an application specific integrated circuit: ASIC) that executes at least part of the processes executed by itself. That is, the processor H15 may be circuitry including: (1) one or more processors that operate according to a computer program (software), (2) one or more dedicated hardware circuits that execute at least part of various types of processes, or (3) a combination thereof. The processor includes a central processing unit (CPU) and memories such as a random-access memory (RAM) and a read-only memory (ROM). The memories store program codes or commands configured to cause the CPU to execute processes. The memory, which is a non-transitory computer readable medium, includes any type of media that are accessible by general-purpose computers and dedicated computers.

[Functions of Information Processing Devices]

The design support system 20, which is shown in Fig. 1, is a computer system that supports design of a fuel cell. The design support system 20 includes the controlling unit 21, the design information storing unit 22, and the three-dimensional information storing unit 23.

The controlling unit 21 executes processes discussed below (processes including sketching, calculation of fluid property, generation of flow channel plan views, generation of three-dimensional shapes, and calculation of a power generation property). By executing the design support program, the controlling unit 21 functions as a sketching unit 211, a fluid property calculating unit 212, a flow channel plan view generating unit 213, a three-dimensional shape generating unit 214, and a power generation property calculating unit 215.

The sketching unit 211 executes a process that supports creation of a sketch by a designer. In the present embodiment, the sketching unit 211 supports creation of a sketch of a flow channel network depicted with dots and lines. A flow channel network includes elements such as dots (nodes), lines (links), and closed loops.

The fluid property calculating unit 212 executes a process that calculates a fluid property (for example, pressure distribution and flow rate distribution) of a fluid flowing through flow channels.

The flow channel plan view generating unit 213 executes a process that generates a flow channel plan view. The flow channel plan view expresses the flow channel shape with two-dimensional polygons based on a sketch of the flow channel network.

The three-dimensional shape generating unit 214 executes a process that generates three-dimensional shapes of the flow channels by adding thicknesses and angles to the flow channel plan view.

The power generation property calculating unit 215 executes a process that calculates power generation property in the same manner as technique disclosed in Non-Patent Literature 1.

The design information storing unit 22 stores design management data, which is related to structures used in design. The design management data is stored when a designer performs designing. The design management data includes design value data and sketch data for respective layers (layer identifiers).

The layer identifiers are used to identify respective layers. In the present embodiment, the layer identifiers are used to identify layers that correspond to anode flow channels, cathode flow channels, an MEA, an outer frame, a coolant seal, anode inlet/output, cathode inlet/outlet, and coolant inlet/outlet.

The design value data includes information related to layer thicknesses and machining variables. The machining variables are specified and determined by a processing method, and represents variables such as the type of machining (stamping or cutting), the stamping angle in stamping, a bent angle (radius of curvature), and a cut shape in cutting.

The sketch data includes node identifier data and coordinate data of nodes arranged on an XY plane. The node identifier data includes information related to identifiers for identifying respective nodes.

The coordinate data includes information related to positions of respective nodes. The information does not necessarily need to be coordinates indicating positions of nodes, but may be variables indicating measurements of regions in which nodes are arranged. For example, a function having, as variables, an MEA width and a diffusion area width may be stored to calculate coordinates of respective nodes.

Further, the sketch data includes information related to links that connect nodes together.

The link data includes information related to the node identifiers of two nodes connected by each link, the width of each link, and the thickness of each link. The width and the thickness of each link correspond to the width and the depth of a flow channel that corresponds to the link.

The three-dimensional information storing unit 23 stores three-dimensional CAD data that is generated based on a sketch created by the designer. The three-dimensional CAD data is stored when the sketch is three-dimensionalized.

[Design Support Process]

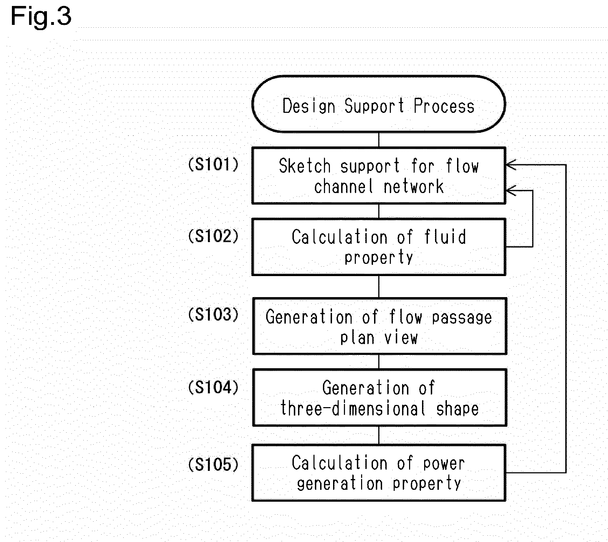

A design support process will now be described with reference to Fig. 3.

First, the controlling unit 21 of the design support system 20 executes a sketch support process for a flow channel network (step S101). Specifically, the sketching unit 211 of the controlling unit 21 displays a design entry screen on the display device H13.

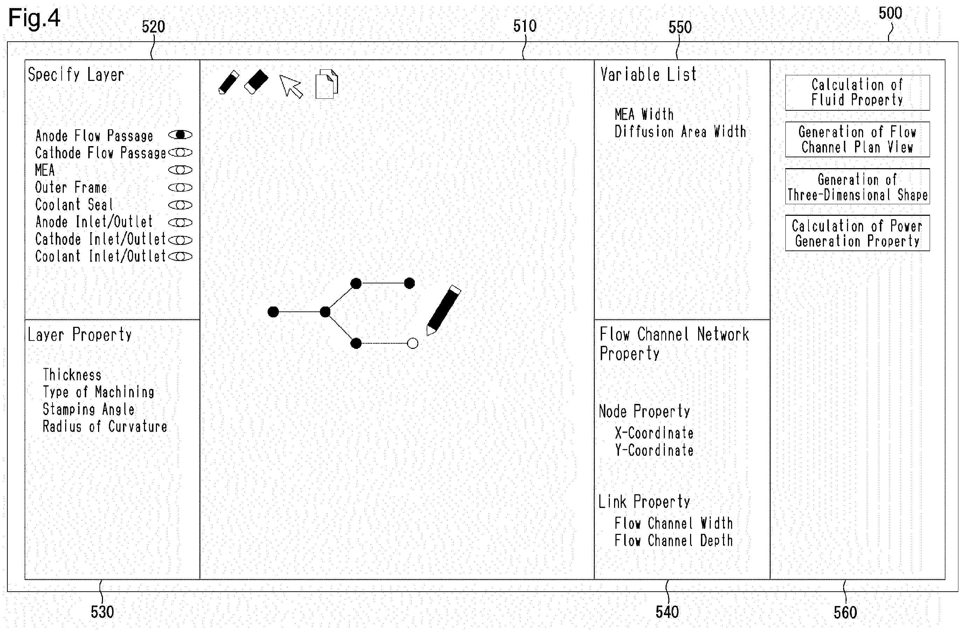

As shown in Fig. 4, a design entry screen 500 includes a sketch area 510, a layer specifying box 520, a layer property box 530, a flow channel network property box 540, a variable list box 550, and an operation button box 560.

The sketch area 510 is used to sketch a flow channel network. The flow channels in a flow channel network are depicted by dots and lines. The sketch area includes a pen icon, an eraser icon, a selection icon, and a copy icon.

The layer specifying box 520 displays buttons for selecting layers to be displayed in the sketch area 510. One or more layers can be specified. The solid polymer fuel cell of the present embodiment includes layers that respectively correspond to anode flow channels, cathode flow channels, MEA, an outer frame, a coolant seal, anode inlet/output, cathode inlet/outlet, and coolant inlet/outlet.

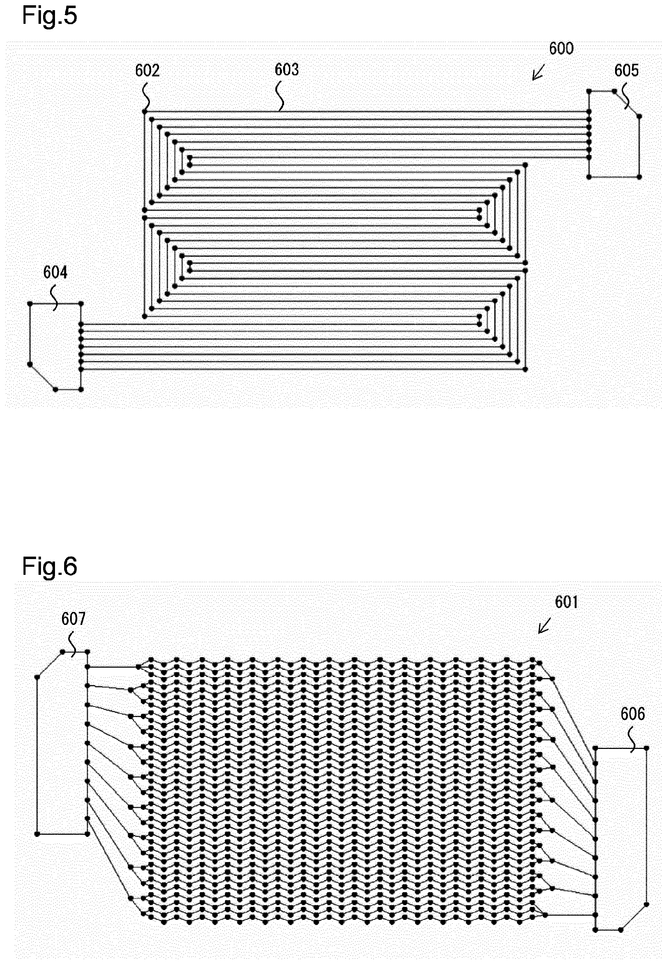

For example, it is assumed that the pen icon is selected to sketch a flow channel network 600 that includes anode flow channels and an anode inlet/outlet as shown in Fig. 5. Also, it is assumed that the pen icon is selected to sketch a flow channel network 601 that includes cathode flow channels and a cathode inlet/outlet as shown in Fig. 6. The flow channel networks 600 and 601 are each formed by nodes 602, which are depicted by dots, and links 603, which are depicted by lines. An anode inlet 604, an anode outlet 605, a cathode inlet 606, and a cathode outlet 607 are each depicted by a closed loop formed by nodes and links.

The layer property box 530 shown in Fig. 4 is an area used to set the thickness of each layer, a type of machining (stamping or cutting), a stamping angle, a radius of curvature, and the like.

The flow channel network property box 540 is used to set the X-coordinate and the Y-coordinate of a selected node, and the flow channel width and the flow channel depth of a selected link.

The variable list box 550 is used to allow the user to define variables. The X-Y coordinate of a node and the flow channel width of a link that are set in the sketch area 510 can be expressed with variables.

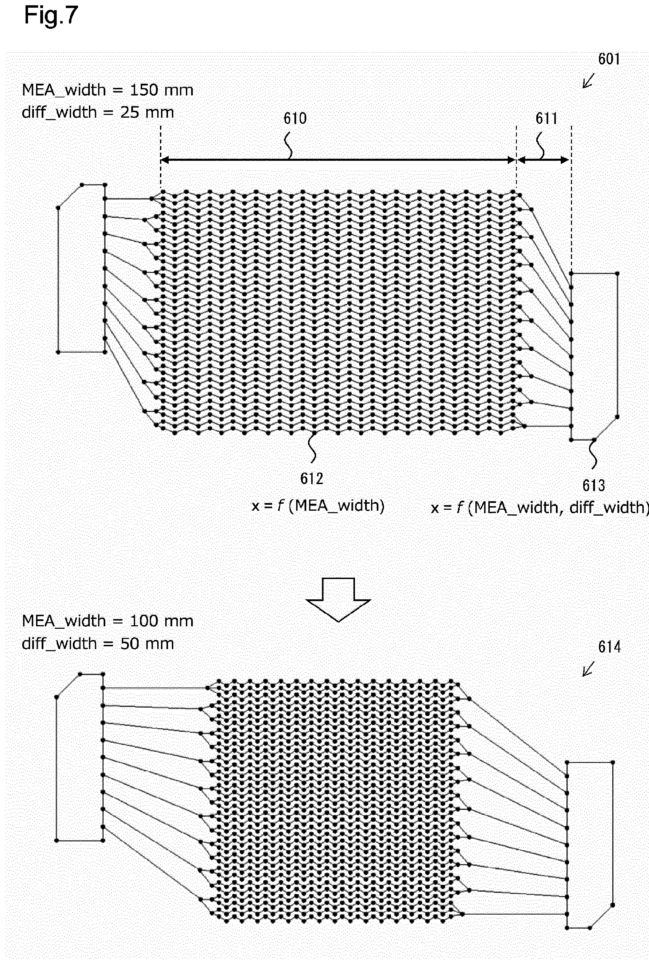

For example, with reference to Fig. 7, the X-coordinates of a node 612 and a node 613 can be given as functions of two variables MEA_width and diff_width, which respectively express an MEA width 610 and a diffusion area width 611. It is thus possible to obtain a flow channel network 614 with different MEA widths and different diffusion area widths by changing the variables. In addition to or in place of this, it is possible to provide, as functions of user-defined variables, various properties such as the number of repetitions of a partial shape of a flow channel network, the thickness of a layer, and the like.

The operation button box 560 shown in Fig. 4 includes buttons for performing fluid property calculation, flow channel plan view generation, three-dimensional shape generation, and power generation property calculation.

When detecting a push (that is, selection) of any of the buttons in the operation button box 560, the sketching unit 211 stores design value data and sketch data that have been input through the design entry screen in the design information storing unit 22.

Next, the controlling unit 21 executes a process that calculates a fluid property (step S102). Specifically, the fluid property calculating unit 212 of the controlling unit 21 calculates, for example, pressure distribution and flow rate distribution as the fluid property of a flow channel network. In the present embodiment, the flow channel widths of the solid polymer fuel cell are in the millimeter scale. It is thus assumed that the flows in the flow channels are laminar flows, and Darcy's law can be applied. According to Darcy's law, a flow rate F is linearly proportional to a pressure difference Op.

$$F = K_{\mathrm{eff}} \frac{\rho}{\mu} \nabla p$$

$$K_{\mathrm{eff}} = \frac{d_{\mathrm{eq}}^2}{32}$$

where $\rho$ represents the density of the fluid, $\mu$ represents the viscosity of the fluid, and $d_{\mathrm{eq}}$ is an equivalent diameter.

An equivalent diameter is an approximate value of a diameter and is obtained from a cross-sectional area S and a wetted perimeter length L of a flow channel.

$$d_{eq} = \frac{4S}{L}$$

The above expression of Darcy's law is modified to be used as a relational expression of a flow rate in relation to a pressure difference between nodes in a flow channel network, so as to generate simultaneous equations based on the law of conservation of flow rate. The simultaneous equations are solved to calculate the pressure at each node and the flow rate in each link in the flow channel network.

Next, the fluid property calculating unit 212 displays a calculation result screen on the display device H13.

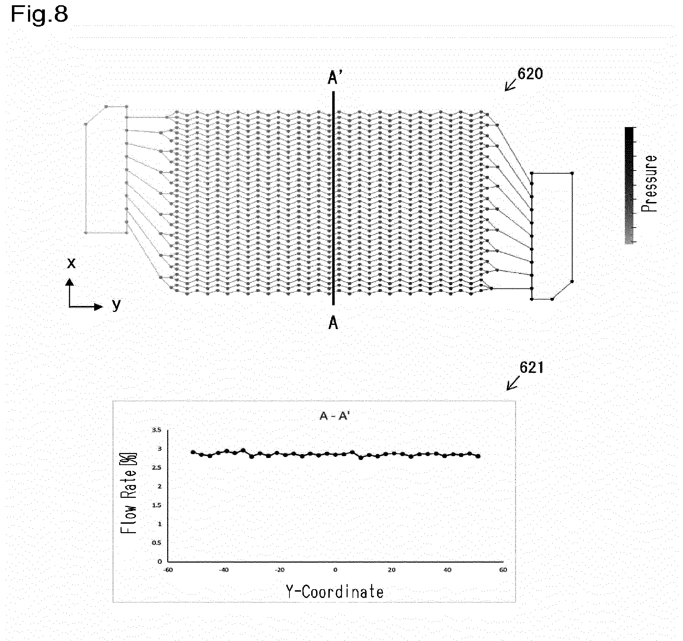

As shown in Fig. 8, the calculation result screen may display a flow channel network 620. Nodes and links of the flow channel network 620 are displayed in different colors in correspondence with pressure distribution. Also, when a cutting-plane line A-A' is specified in the flow channel network 620, the flow rates of the links that intersect with the cutting-plane line may be expressed in a graph 621.

The designer checks the calculated fluid property and may return to step S101 as necessary, so as to modify the sketch of the flow channel network or change the values of variables. In this case, the fluid property calculating unit 212 recalculates the fluid property in accordance with modifications and changes, and shows the recalculated fluid property in the calculation result screen.

Next, the controlling unit 21 performs a process that generates a flow channel plan view (step S103). Specifically, the flow channel plan view generating unit 213 of the controlling unit 21 generates a flow channel plan view from the flow channel network by using the design value data stored in the design information storing unit 22.

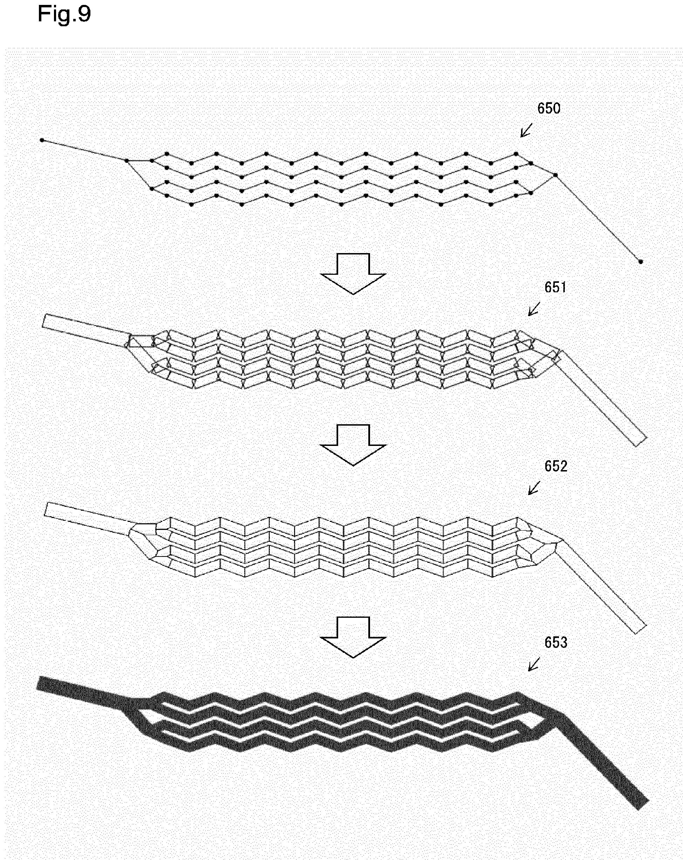

For example, a flow channel network 650 shown in Fig. 9 is converted into an aggregate 651 of rectangles that have been generated using the flow channel widths of the respective links. Subsequently, the rectangle aggregate 651 is converted into an aggregate 652 of polygons by using intersections of sides of the rectangles, and is ultimately converted into a flow channel plan view 653.

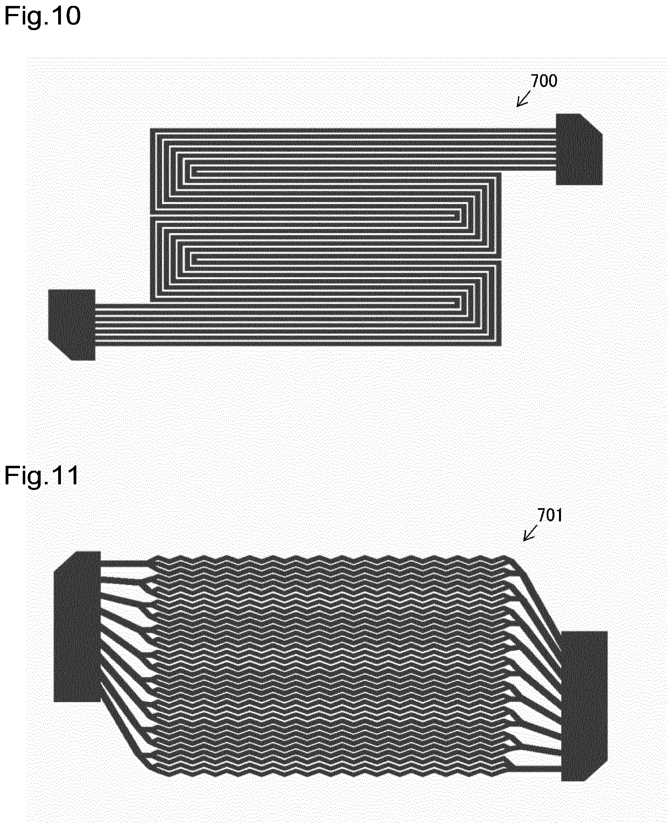

For example, a flow channel plan view 700 shown in Fig. 10 is generated from the flow channel network 600 of Fig. 5. Also, a flow channel plan view 701 shown in Fig. 11 is generated from the flow channel network 601 of Fig. 6.

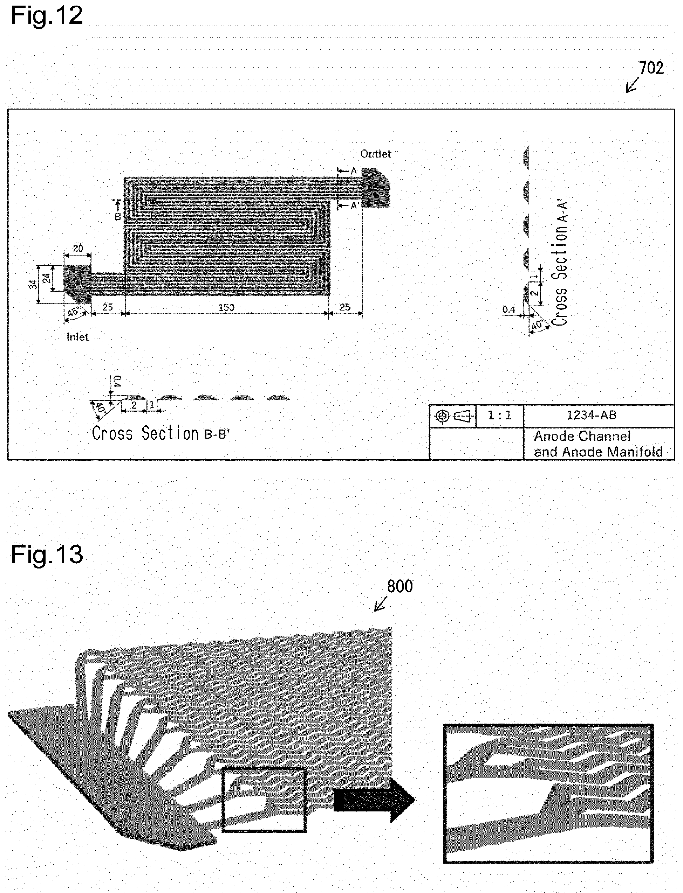

The flow channel plan view generating unit 213 may output a two-dimensional drawing 702, which clearly shows measurements of a flow channel shape as shown in Fig. 12. Also, once the measurements of the flow channel shape and the thickness of a separator are determined, the measurements of a stamping die can be determined. Therefore, the flow channel plan view generating unit 213 may output a two-dimensional drawing of the stamping die.

Next, the controlling unit 21 performs a process that generates a three-dimensional shape (step S104). Specifically, the three-dimensional shape generating unit 214 of the controlling unit 21 generates a three-dimensional shape of flow channels from a flow channel plan view by using the thickness of the layer, the type of machining, and the stamping angle stored in the design information storing unit 22. In this case, for example, the flow channel plan view is lifted by an amount corresponding to the flow channel depth specified by a specified stamping angle. The three-dimensional shape generating unit 214 associates the generated three-dimensional shape with a layer identifier and stores the generated three-dimensional shape as three-dimensional CAD data in the three-dimensional information storing unit 23.

For example, a three-dimensional shape 800 shown in Fig. 13 is generated from the flow channel plan view 701 shown in Fig. 11.

In order to accurately reproduce the characteristics of stamping, corners in the three-dimensional shape may be rounded to have specified radii of curvature. However, the difficulty level of mesh generation, which will be discussed below, is relatively high in general when three-dimensional CAD data having curved surfaces is treated. As such, the corners are not rounded in the present embodiment.

When completing three-dimensionalization of the respective flow channel plan views, the three-dimensional shape generating unit 214 three-dimensionalizes parts adjacent to the flow channels.

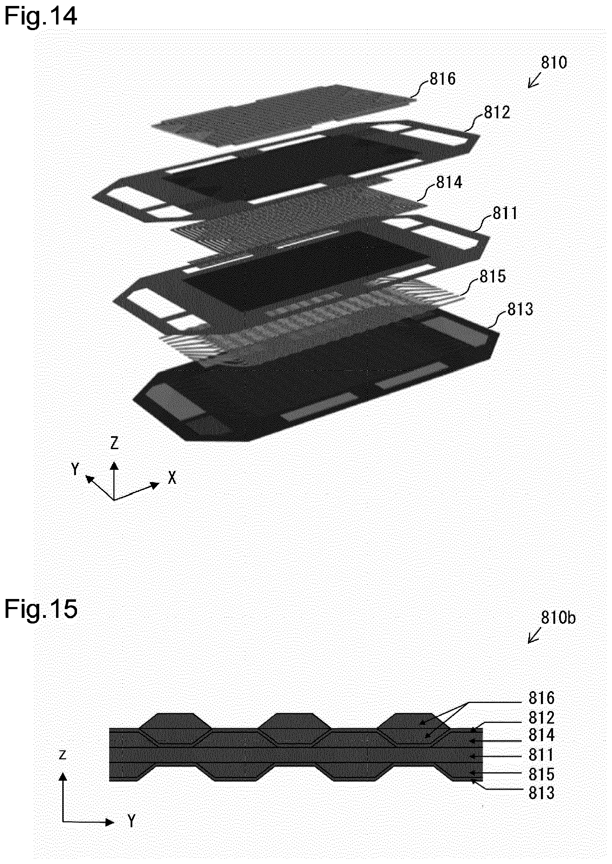

In this case, a three-dimensional shape 810 of an entire polymer fuel cell is generated as shown in Fig. 14. In Fig. 14, layers stacked in a direction along the Z-axis of the three-dimensional shape 810 are displayed in a state separated in the direction along the Z-axis. Fig. 15 shows an enlarged cross-sectional view 810b obtained by cutting the center of the cell of the three-dimensional shape 810 with a YZ plane.

The MEA and a gasket 811 are three-dimensionalized by adding a specified thicknesses to planes expressed by closed loops specified by layers of the MEA and the outer frame. An anode separator 812 and a cathode separator 813, which have specified thicknesses, are generated by extracting, through Boolean operations, three-dimensional shapes. The three-dimensional shapes have recesses and protrusions that have inverted shapes of recesses and protrusions of an anode flow channel 814 and a cathode flow channel 815. Further, coolant flow channels 816 are generated by extracting, through a Boolean operation, gaps formed when the anode separator 812 and the cathode separator 813 are brought into contact with each other.

Next, the controlling unit 21 performs a process that calculates a power generation property (step S105). Specifically, the power generation property calculating unit 215 of the controlling unit 21 reads the three-dimensional CAD data of the entire solid polymer fuel cell, and calculates power generation properties under various operating conditions. In this case, a method disclosed in Non-Patent Literature 1 can be used. Since heat transfer and electrical conduction of solid parts need to be taken into consideration in calculation of a power generation property, the three-dimensional CAD data of solid parts such as the separators and the gasket needs to be used in addition to the data of the fluid part.

In order to calculate the power generation property, the three-dimensional CAD data needs to be divided to form a mesh of polyhedrons.

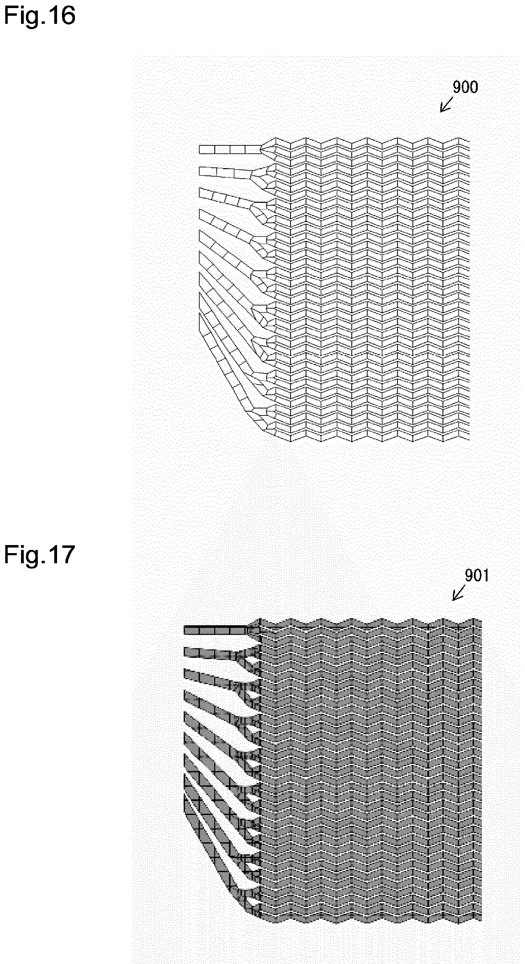

In the present embodiment, normal vectors of the links of the flow channel network are used to divide flow channels 900 with lines orthogonal to the direction of flow of the flow channel as shown in Fig. 16.

When completing the calculation of the power generation property, the power generation property calculating unit 215 displays a calculation result screen on the display device H13. The calculation result screen includes a current-voltage curve of the solid polymer fuel cell, and the concentration distributions of hydrogen and oxygen, the distribution of current density, and the temperature distribution in the MEA.

The designer evaluates whether the power generation property meets a target criterion and returns to the sketch support process (step S101) of a flow channel network when necessary. For example, if there is a region in the MEA in which the temperature locally exceeds a permissible range during power generation, the flow channel shape is corrected such that coolant reaches that region.

The present embodiment achieves the following advantages.

(1) The controlling unit 21 of the design support system 20 executes the sketch support process for a flow channel network (step S101). Accordingly, a flow channel network depicted with dots and lines allows two-dimensional drawings and three-dimensional CAD data to be automatically generated for flow channels and parts adjacent to the flow channels (including a stamping die). This significantly reduces the time required to generate the two-dimensional drawings and the three-dimensional CAD data. For example, a complicated task using three-dimensional CAD that would require a few weeks in a conventional method can be finished in about a day. Also, since operation of three-dimensional CAD software is complicated and takes time, different persons are often appointed as a designer and a CAD operator at the stage of development. However, since the present embodiment only requires a simple sketching operation, a designer can easily complete the task alone. Also, the two-dimensional drawings can be used when outsourcing cutting of flow channels or production of a stamping die. As such, the present disclosure allows proper flow channels to be designed efficiently.

(2) At the stage of creating a sketch of a flow channel network, the positions, the number of repetitions, the flow channel widths, and the flow channel depths of lines representing flow channels are not fixed values, but are variables or determined by expressions. Thus, the flow channel shape can be changed in length, pitch, and aspect ratio by simply changing the values of the defined variables, and two-dimensional drawings and three-dimensional CAD data that correspond to those changes can be generated automatically. This may be combined with optimization by a genetic algorithm. In this case, design variables are repeatedly changed and evaluated so that the fluid property and the power generation property become target values. Accordingly, an optimum flow channel shape is searched automatically.

(3) The controlling unit 21 executes a process that calculates a fluid property (step S102). That is, at the stage of creating a sketch of a flow channel network, the fluid property such as the pressure distribution and the flow rate distribution are calculated in a short time (for example, a few seconds). This allows the designer to perform trial-and-error iterations in a short time in order to correct the sketch and evaluate the quality of the sketch so that the fluid property becomes proper. Conventionally, calculation of a fluid property requires generation of three-dimensional CAD data, creation of a mesh, and fluid simulations, and takes, for example, a few hours to a few weeks. However, the present embodiment displays a calculation result in a few seconds.

(4) When generating a mesh, normal vectors of links of the flow channel network are used to divide the flow channels 900 with lines orthogonal to the direction of flow of the flow channels. This generates a high-quality mesh with a small number of elements. For example, conventional mesh generation generates a mesh divided by lines parallel with the X-axis and the Y-axis as shown in Fig. 17. This method has a drawback in that microelements are created in flow channels 901, which are diagonal to the X-axis or Y-axis. However, in the present embodiment, the flow channel shape can be recognized from the three-dimensional CAD data, so that a proper mesh is created automatically.

(5) The controlling unit 21 performs a process that calculates a power generation property (step S105). This allows a mesh to be created from three-dimensional CAD data, so that the power generation property is calculated. Since a power generation property can be predicted taking into consideration of the three-dimensional shapes of the flow channels and adjacent parts, the designer can change the flow channel shape so as to meet target criteria.

The present embodiment may be modified as follows. The present embodiment and the following modifications can be combined as long as the combined modifications remain technically consistent with each other. In the above-described embodiment, variables such as the angle at which a boss is pushed are set in accordance with the processing method on the design entry screen. In place of this, the controlling unit 21 may determine the shape in accordance with a selected processing method. In this case, the design support system 20 includes a three-dimensionalizing information storage unit, which stores three-dimensionalizing information for three-dimensionalizing a two-dimensional shape. The three-dimensionalizing information includes manufacturing method identifier data and generative model data. The manufacturing method identifier data includes information related to an identifier for identifying a manufacturing method used to manufacture flow channels. Examples of the manufacturing method include stamping with a die and cutting of carbon. The generative model data includes information related to a model for converting an input two-dimensional shape into a three-dimensional shape.

In the above-described embodiment, the fluid property is calculated at the stage of sketching. A cross-sectional flow area, a length of the wetted perimeter in the flow channel, and a flow channel length are obtained from a flow channel width and a flow channel depth that are specified by the user. The obtained cross-sectional flow area, length of the wetted perimeter in the flow channel, and flow channel length are used to easily obtain a coefficient of pressure loss at each point in the flow channel, so as to calculate the pressure distribution and the flow rate distribution of the entire flow channel. In contrast, fluid simulations using three-dimensional CAD can accurately calculate the coefficient of pressure loss at each point in a flow channel from the pressure difference and the flow rate at each point that are obtained by solving general fluid equations. Thus, the prediction accuracy of the coefficient of pressure loss that is obtained through the former method may be improved by performing machine learning using, as training data, the coefficient of pressure loss that is obtained through the latter method. Specifically, fluid simulations using three-dimensional CAD is performed for sketches of various flow channel shapes, so as to obtain the coefficient of pressure loss at each point in each of the various flow channel shapes. Next, a machine learning model is generated that predicts a coefficient of pressure loss by using, as feature quantities, the flow channel widths, the flow channel depths, connection angles of the flow channels, and the number of connected flow channels at each point in each flow channel shape. Using the machine learning model increases the accuracy of the coefficient of pressure loss obtained at the stage of sketching. This allows the fluid property to be quickly and accurately calculated at the stage of sketching.

In the above-described embodiment, the controlling unit 21 performs a process that generates a three-dimensional shape (step S104) in accordance with the processing method. In the case of stamping, for example, a thin metal plate is often stamped to have recesses and protrusions, and opposite surfaces of the thin plate are used to form flow channels. Thus, in the above-described embodiment, the coolant flow channels 816 are generated by extracting, through a Boolean operation, gaps formed when the anode separator 812 and the cathode separator 813 are brought into contact with each other. However, the method for forming the flow channel shape of adjacent layers is not limited to the one that uses gaps. For example, in the case of cutting, the opposite surfaces of a thin plate may be cut to form different patterns to be used as flow channels. In this case, the controlling unit 21 is allowed to generate the flow channel shape of each layer without depending on the flow channel shapes of other layers.

In the above-described embodiment, the present disclosure is applied to design of fuel cells. However, the present disclosure is not limited to this. The present disclosure may be applied to any structure that includes flow channels, such as a water electrolysis device, a device for producing synthetic liquid fuel (e-fuel), or a microreactor.

## Claims

1. A design support system, comprising:

a controlling unit that is connected to an input unit, the controlling unit being configured to:

obtain, from the input unit, information representing a flow channel network that simulates a flow channel shape; and
use a flow channel width and a flow channel depth of the flow channel network, thereby generating design data of a three-dimensional flow channel that is obtained by three-dimensionalizing the flow channel network.

2. The design support system according to claim 1, wherein the controlling unit is configured to use the flow channel width, thereby generating a two-dimensional flow channel plan view.

3. The design support system according to claim 1 or 2, wherein the controlling unit is configured to:

obtain a value of a variable that determines a measurement of the flow channel network; and
calculate the measurement in accordance with the value.

4. The design support system according to claim 3, wherein the variable that determines the measurement of the flow channel network at least includes a number of repetitions of a partial shape of the flow channel network.

5. The design support system according to any one of claims 1 to 4, wherein the controlling unit is configured to generate the design data in accordance with characteristics of a processing method.

6. The design support system according to claim 5, wherein the controlling unit is configured to, if the processing method is stamping, generate the design data in accordance with a shape obtained through the stamping.

7. The design support system according to claim 5, wherein the controlling unit is configured to, if the processing method is cutting, generate the design data in accordance with a shape obtained through the cutting.

8. The design support system according to any one of claims 1 to 7, wherein

the design data is first design data of a first three-dimensional flow channel, and
the controlling unit is configured to, in accordance with the first design data, generate second design data of a second three-dimensional flow channel adjacent to the first three-dimensional flow channel.

**9.** The design support system according to any one of claims 1 to 8, wherein the controlling unit is configured to generate a mesh of the three-dimensional flow channel based on arrangement of an element in the flow channel network.

**10.** The design support system according to any one of claims 1 to 9, wherein the controlling unit is configured to:

calculate a state distribution of a phenomenon caused by a fluid when the fluid flows through the three-dimensional flow channel; and output the calculated state distribution.

**11.** The design support system according to claim 10, wherein

the flow channel network includes nodes and links connecting the nodes, and the controlling unit is configured to calculate the state distribution by calculating a state at each of the nodes and the links.

**12.** The design support system according to claim 11, wherein the controlling unit is configured to display the flow channel network by showing the state.

**13.** The design support system according to claim 10, wherein the controlling unit is configured to adjust the measurement of the flow channel network in accordance with the state distribution that is predicted.

**14.** A method for performing design support by using a design support system, the design support system including a controlling unit connected to an input unit, the method comprising:

the controlling unit obtaining, from the input unit, information representing a flow channel network that simulates a flow channel shape; and the controlling unit using a flow channel width and a flow channel depth of the flow channel network, thereby generating design data of a three-dimensional flow channel that is obtained by three-dimensionalizing the flow channel network.

**15.** A program for performing design support, wherein, when executed by a controlling unit of a design support system, the program causes the controlling unit to:

obtain, from an input unit connected to the controlling unit, information representing a flow channel network that simulates a flow channel shape; and use a flow channel width and a flow channel depth of the flow channel network, thereby generating design data of a three-dimensional flow channel that is obtained by three-dimensionalizing the flow channel network.

Fig.1

Support Server 20

Controlling Unit 21

Sketching Unit 211

Fluid Property Calculating Unit 212

Flow Channel Plan View Generating Unit 213

Three-Dimensional Shape Generating Unit 214

Power Generation Property Calculating Unit 215

Design Information Storing Unit 22

Three-Dimensional Information Storing Unit 23

Fig.2

Information Processing Device H10

Processor H15

Memory Device H14

Communication Device H11

Input Device H12

Display Device H13

Fig.3

```
              ╭─────────────────────────────╮
              │    Design Support Process   │
              ╰──────────────┬──────────────╯
                             │
(S101)       ┌───────────────┴─────────────┐◄──────┐
             │    Sketch support for flow  │◄────┐ │
             │       channel network       │     │ │
             └───────────────┬─────────────┘     │ │
                             │                    │ │
(S102)       ┌───────────────┴─────────────┐     │ │
             │      Calculation of fluid   │─────┘ │
             │          property           │       │
             └───────────────┬─────────────┘       │
                             │                      │
(S103)       ┌───────────────┴─────────────┐       │
             │  Generation of flow passage │       │
             │          plan view          │       │
             └───────────────┬─────────────┘       │
                             │                      │
(S104)       ┌───────────────┴─────────────┐       │
             │        Generation of        │       │
             │   three-dimensional shape   │       │
             └───────────────┬─────────────┘       │
                             │                      │
(S105)       ┌───────────────┴─────────────┐       │
             │    Calculation of power     │───────┘
             │    generation property      │
             └─────────────────────────────┘
```

Fig.4

Specify Layer

Anode Flow Passage
Cathode Flow Passage
MEA
Outer Frame
Coolant Seal
Anode Inlet/Outlet
Cathode Inlet/Outlet
Coolant Inlet/Outlet

Layer Property

Thickness
Type of Machining
Stamping Angle
Radius of Curvature

Variable List

MEA Width
Diffusion Area Width

Flow Channel Network
Property

Node Property
  X-Coordinate
  Y-Coordinate

Link Property
  Flow Channel Width
  Flow Channel Depth

Calculation of
Fluid Property

Generation of Flow
Channel Plan View

Generation of
Three-Dimensional Shape

Calculation of Power
Generation Property

520  510  550  500  530  540  560

EP 4 239 511 A1

Fig.5

Fig.6

# Fig.7

601

MEA_width = 150 mm
diff_width = 25 mm

610

611

612
x = f (MEA_width)

613
x = f (MEA_width, diff_width)

MEA_width = 100 mm
diff_width = 50 mm

614

Fig.8

Fig.9

650

651

652

653

Fig.10

Fig.11

Fig.12

702

Outlet

Cross Section A-A'

1
2
0.4
40°

20
34
24
45°
25
150
25

Inlet

0.4
40°
2
1

Cross Section B-B'

| ⊕◁ | 1:1 | 1234-AB |
|---|---|---|
| | | Anode Channel and Anode Manifold |

Fig.13

800

Fig.14

Fig.15

Fig.16

900

Fig.17

901

## INTERNATIONAL SEARCH REPORT

| International application No. |
|---|
| PCT/JP2021/027355 |

A.  CLASSIFICATION OF SUBJECT MATTER

G06F 30/10(2020.01)i; G06F 30/18(2020.01)i; G06F 113/14(2020.01)n

FI: G06F30/18; G06F30/10 100; G06F113: 14

According to International Patent Classification (IPC) or to both national classification and IPC

B.  FIELDS SEARCHED

Minimum documentation searched (classification system followed by classification symbols)

G06F30/00-30/398; G06F113/14

Documentation searched other than minimum documentation to the extent that such documents are included in the fields searched

|  |  |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2010-186475 A (LIVERMORE SOFTWARE TECHNOLOGY CORPORATION) 26 August 2010 (2010-08-26) paragraphs [0014]-[0037] | 1-4, 9-15<br>5-8 |
| Y<br>A | JP 2010-92375 A (TOSHIBA CORP.) 22 April 2010 (2010-04-22) claims | 1-4, 9-15<br>5-8 |
| Y<br>A | JP 8-022487 A (SEKISUI CHEMICAL CO., LTD.) 23 January 1996 (1996-01-23) paragraph [0051] | 2-4, 9-13<br>1, 5-8, 14, 15 |
| Y<br>A | JP 4-326168 A (MITSUBISHI ELECTRIC CORP.) 16 November 1992 (1992-11-16) paragraph [0028] | 4, 9-13<br>1-3, 5-8, 14, 15 |

☒  Further documents are listed in the continuation of Box C.  ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 14 September 2021 (14.09.2021) | 21 September 2021 (21.09.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

International application No.

PCT/JP2021/027355

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 2006-065843 A (NARUTO, Hiroyuki) 09 March 2006<br>(2006-03-09) claims, paragraph [0139] | 11-13<br>1-10, 14, 15 |

Form PCT/ISA/210 (continuation of second sheet) (January 2015)

| INTERNATIONAL SEARCH REPORT | | International application no. | |
|---|---|---|---|
| Information on patent family members | | PCT/JP2021/027355 | |

| Patent Documents referred in the Report | Publication Date | Patent Family | Publication Date |
|---|---|---|---|
| JP 2010-186475 A | 26 Aug. 2010 | US 2010/0204963 A1 paragraphs [0023]-[0048] EP 2219124 A2 CN 101833595 A | |
| JP 2010-92375 A | 22 Apr. 2010 | US 2010/0094598 A1 claims EP 2178013 A2 KR 10-2010-0040256 A | |
| JP 8-022487 A | 23 Jan. 1996 | (Family: none) | |
| JP 4-326168 A | 16 Nov. 1992 | (Family: none) | |
| JP 2006-065843 A | 09 Mar. 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020038582 A

- JP 2005347016 A

**Non-patent literature cited in the description**

- Fuel Cell Simulation Software Package P-Stack 4.0: Introduction of Full-Scale Stack Simulator and its Remarkable Features. Mizuho Information & Research Institute Technical Report. Mizuho Information & Research Institute, 2017, vol. 8